# EUROPEAN PATENT APPLICATION

(11) **EP 1 788 488 A1**
(43) Date of publication of application: **23.05.2007**
(21) Application number: 06123951.3
(22) Date of filing: 13.11.2006
(51) Int. Cl.: G06F 13/10

(54) **Interface device, interface cable apparatus, and communication method and system having the same**

(30) Priority: 16.11.2005 KR 20050109893
(71) Applicant: Samsung Electronics Co., Ltd., Suwon-si 442-742 Gyeonggi-Do (KR)
(72) Inventor: Ryu, Jun-young, Seongnam-si, Gyeonggi-do (KR)
(74) Representative: Robinson, Ian Michael

(57) **Abstract**

An interface device (30), an interface cable apparatus (40) and a communication method and system having the same are disclosed. The interface device (30) interfaces between a first electronic device (10) which supports a first interface and a second electronic device (20) which supports a second interface, to facilitate communication between the first and second electronic devices (10, 20). The interface device (30) includes a first interface unit (31) connected to the first electronic device (10), a second interface unit (32) connected to the second electronic device (20), and a signal converter (39) for converting a first interface signal input through the first interface unit (31) to an interface signal capable of being communicated through the second interface and outputting the converted first interface signal to the second interface unit (32), and converting a second interface signal input through the second interface unit (32) to an interface signal capable of being communicated through the first interface and outputting the converted second interface signal to the first interface unit (31). Accordingly, proper communication between different electronic devices that support different communication interfaces may be realized without changing specifications of the electronic devices.

## Description

The present invention relates to an interface device. More particularly, the present invention relates to an interface device and an interface cable apparatus for facilitating proper communication between different electronic devices that support different communication interfaces, and a method and communication system having the same.

With the technical advance of electronic devices and an increase in the variety of users' demands, communication systems for interfacing between electronic devices with distinctive capabilities are being established to implement diverse functions by means of data transmissions between the electronic devices. In this regard, there is a need for techniques to allow data to be freely exchanged between various electronic devices.

A system for exchanging data between electronic devices includes a synchronous system which exchanges data between electronic devices in accurate synchronization between timings of the data, and an asynchronous system which exchanges data between electronic devices with no synchronization between timings of the data. The asynchronous system includes an asynchronous serial system which directly exchanges data between electronic devices, like a typical RS-232 communication interface, without modulating and demodulating the data.

Electronic devices that support the RS-232 communication interface cannot properly exchange data with other electronic devices that do not support the RS-232 communication interface. For example, when a first electronic device that supports a communication interface is connected to and communicates with a second electronic device that supports a different communication interface, the first electronic device is unable to recognize an interface signal transmitted from the second electronic device because a voltage level of the interface signal is incompatible with a voltage level of the communication interface supported by the first electronic device.

Conventional configurations require one of the electronic devices to change its communication interface for proper data intercommunication when different electronic devices supporting different communication interfaces are interconnected for data communication.

Accordingly, there is a need for an improved system and method for facilitating proper communication between different electronic devices that support different communication interfaces without changing the specifications of the electronic devices.

According to the present invention there is provided an apparatus and method as set forth in the appended claims. Preferred features of the invention will be apparent from the dependent claims, and the description which follows.

An aspect of exemplary embodiments of the present invention is to address at least the above problems and/or disadvantages and to provide at least the advantages described below. Accordingly, it is an aspect of exemplary embodiments of the present invention to provide an interface device and an interface cable apparatus for facilitating proper communication between different electronic devices that support different communication interfaces without having to change the specifications of the electronic devices, and a communication system with the interface device and the interface cable apparatus.

The foregoing and/or other aspects of an exemplary embodiment of the present invention can be achieved by providing an interface device comprising: a first interface unit for connecting to a first electronic device to transmit and receive a first interface signal; a second interface unit for connecting to a second electronic device to transmit and receive a second interface signal; and a signal converter for converting the first interface signal input through the first interface unit into the second interface signal to be outputted to the second interface unit.

According to an exemplary implementation, the signal converter converts a voltage level of the first interface signal input through the first interface unit into a voltage level of the second interface signal to be outputted to the second interface unit.

According to an exemplary implementation, the signal converter comprises a level conversion information unit to convert the voltage level of the first interface signal into the voltage level of the second interface signal.

According to an exemplary implementation, the signal converter converts the second interface signal input through the second interface unit into the first interface signal to be outputted to the first interface unit.

According to an exemplary implementation, the signal converter converts a voltage level of the second interface signal input through the second interface unit into a voltage level of the first interface signal to be outputted to the first interface unit.

According to an exemplary implementation, the signal converter comprises a level conversion information unit to convert the voltage level of the second interface signal into the voltage level of the first interface signal.

According to an exemplary implementation, the first interface signal comprises an RS-232 interface signal, and the second interface signal comprises an interface signal different from the RS-232 interface signal.

According to an exemplary implementation, the second interface signal comprises one of a transistor-transistor logic (TTL) interface signal and a complementary metal oxide semiconductor (CMOS) interface signal.

According to an exemplary implementation, the first interface unit and the second interface unit perform universal asynchronous receiver and transmitter (UART) communication with the first electronic device and the second electronic device.

The foregoing and/or other aspects of an exemplary embodiment of the present invention can be achieved by providing an interface cable apparatus comprising: a first interface jack for connecting to a first electronic device to transmit and receive a first interface signal; a second interface jack for connecting to a second electronic device to transmit and receive a second interface signal; an interface device which converts a first interface signal input through the first interface jack into a second interface signal to be outputted to the second interface jack, and converts the second interface signal input through the second interface jack into the first interface signal to be outputted to the first interface jack.

According to an exemplary implementation, the interface device converts a voltage level of the first interface signal input through the first interface jack into a voltage level of the second interface signal to be outputted to the second interface jack, and converts the voltage level of the second interface signal input through the second interface jack into the level of the first interface signal to be outputted to the first interface jack.

According to an exemplary implementation, the interface device comprises a level conversion information unit to convert the voltage level of the first interface signal into the voltage level of the second interface signal or convert the voltage level of the second interface signal into the voltage level of the first interface signal.

According to an exemplary implementation, the first interface signal comprises an RS-232 interface signal, and the second interface signal comprises an interface signal different from the RS-232 interface signal.

According to an exemplary implementation, the second interface signal comprises one of a transistor-transistor logic (TTL) interface signal and a complementary metal oxide semiconductor (CMOS) interface signal.

The foregoing and/or other aspects of an exemplary embodiment of the present invention can be achieved by providing a communication system for interfacing between electronic devices that support different interfaces, comprising: a first electronic device to transmit and receive a first interface signal; a second electronic device to transmit and receive a second interface signal; an interface device which comprises a first interface unit for connecting to the first electronic device, a second interface unit for connecting to the second electronic device, and a signal converter for converting the first interface signal input through the first interface unit into the second interface signal to be outputted to the second interface unit and converting the second interface signal input through the second interface unit into the first interface signal to be outputted to the first interface unit.

According to an exemplary implementation, the signal converter converts a voltage level of the first interface signal input through the first interface unit into a voltage level of the second interface signal to be outputted to the second interface unit, and converts the voltage level of the second interface signal input through the second interface unit into the level of the first interface signal to be outputted to the first interface unit.

According to an exemplary implementation, the signal converter comprises a level conversion information unit to convert the voltage level of the first interface signal into the voltage level of the second interface signal or convert the voltage level of the second interface signal into the voltage level of the first interface signal.

According to an exemplary implementation, the first interface signal comprises an RS-232 interface signal, and the second interface signal comprises an interface signal different from the RS-232 interface signal.

According to an exemplary implementation, the second interface signal comprises one of a transistor-transistor logic (TTL) interface signal and a complementary metal oxide semiconductor (CMOS) interface signal.

According to an exemplary implementation, the first interface unit and the second interface unit perform universal asynchronous receiver and transmitter (UART) communication with the first electronic device and the second electronic device.

According to an exemplary implementation, the communication system further comprises: interface jacks for connecting to the first electronic device and the second electronic device, respectively; and a cable of connecting the interface jack and the interface device.

The foregoing and/or other aspects of an exemplary embodiment of the present invention can be achieved by providing a method for converting first and second interface signals for communication between first and second electronic devices in an interface device, the method comprising: receiving the first interface signal from the first electronic device; and converting the first interface signal into the second interface signal to be outputted to the second electronic device.

According to an exemplary implementation, the method further comprises: receiving the second interface signal from the second electronic device; and converting the second interface signal into the first interface signal to be outputted to the first electronic device.

The above and other exemplary objects, features and advantages of certain exemplary embodiments of the prevent invention will be more apparent from the following description taken in conjunction with the accompanying drawings, in which:
Figure 1 is a view illustrating the external appearance of a communications system according to an exemplary embodiment of the present invention;
Figure 2 is a control block diagram of the communication system according to an exemplary embodiment of the present invention; and

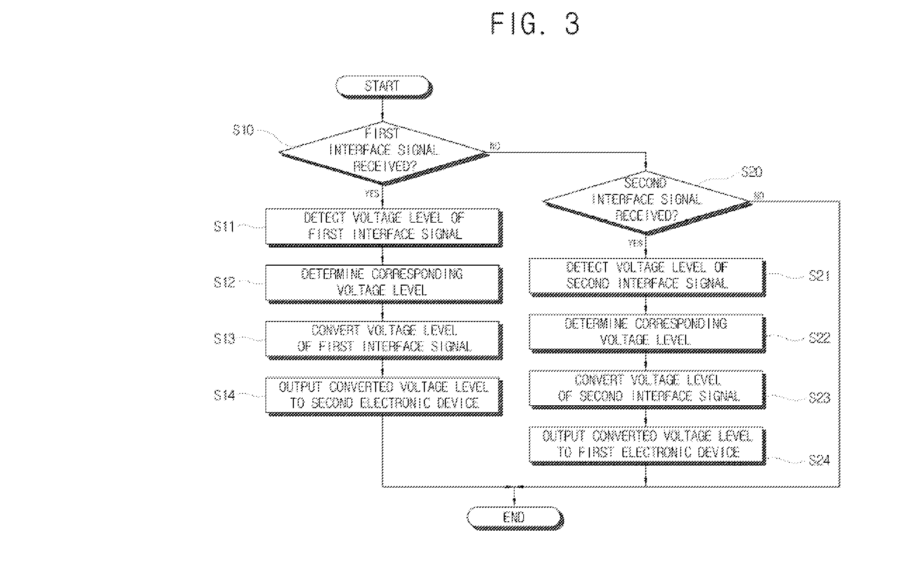

Figure 3 is a flowchart illustrating conversion of first and second interface signals for communication between first and second electronic devices in the communication system according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

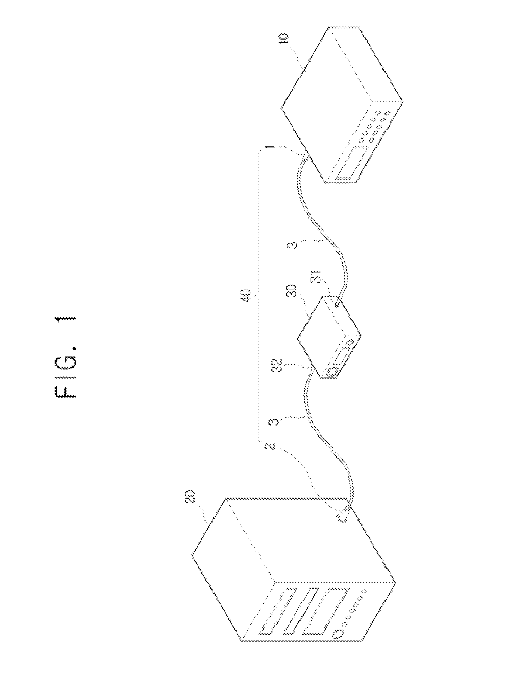

Figure 1 is a view illustrating the external appearance of a communication system according to an exemplary embodiment of the present invention. As illustrated in Figure 1, the communication system comprises a first electronic device 10 and a second electronic device 20 that support different communication interfaces, and an interface cable apparatus 40 which interfaces the first electronic device 10 and the second electronic devices 20 to facilitate communication.

The first electronic device 10 and the second electronic device 20 support different communication interfaces. Specifically, a voltage level of a first interface signal transferred through a first interface supported by the first electronic device 10 is different from a voltage level of a second interface signal transferred through a second interface supported by the second electronic device 20.

In this exemplary embodiment, the first interface supported by the first electronic device 10 comprises an RS-232 communication interface corresponding to an asynchronous serial system.

According to an exemplary implementation, the second interface supported by the second electronic device 20 comprises a communication interface with a voltage level different from the voltage level of the interface signal that is transferred through the first interface, that is, the RF-232 communication interface. This communication interface, as the second interface, comprises one of a transistor-transistor logic (TTL) communication interface and a complementary metal oxide semiconductor (CMOS) communication interface.

The interface cable apparatus 40 comprises a first interface jack 1 connected to the first electronic device 10, a second interface jack 2 connected to the second electronic device 20, a cable 3 interconnecting the first interface jack 1 and the second interface jack 2, and an interface device 30 intervened in the cable 3. The interface device 30 is responsible for converting the first interface signal transferred from the first electronic device 10 to an interface signal recognizable by the second electronic device 20 and for outputting the converted first interface signal to the second electronic device 20. The interface device also converts the second interface signal transferred from the second electronic device 20 to an interface signal recognizable by the first electronic device 10 and outputs the converted second interface signal to the first electronic device 10.

With regards to the interface between the first electronic device 10 and the second electronic device 20 that support the different interfaces for mutual communication, the communication system includes the interface cable apparatus 40 for converting the interface signal transferred from the electronic device 10 or 20 to the interface signal recognizable by the other electronic device 20 or 10 and for providing it to the other electronic device 20 or 10. Therefore, the communication system can overcome the shortcoming that the communication interface of one of the electronic devices 10 and 20 needs to be changed for proper data communication as in the conventional system, and facilitate proper data communication between the first and second electronic devices 10 and 20 by interfacing between the first electronic device 10 and the second electronic device 20 that support the different communication interfaces by means of the interface cable apparatus 40.

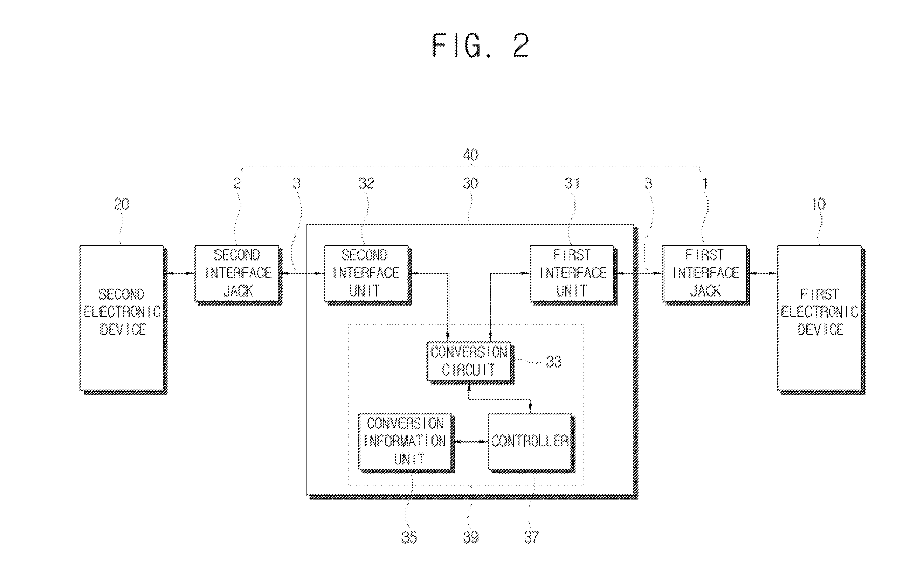

Hereinafter, the interface cable apparatus 40 will be described in more detail with reference to Figure 2 illustrating a control block diagram of the communication system according to the exemplary embodiment of the present invention.

The first interface jack 1 is connected to the first interface of the first electronic device 10. The first interface jack 1 forwards the first interface signal output from the first electronic device 10 via the first interface, to the interface cable apparatus 40, and forwards the interface signal, which is output from the interface cable apparatus 40, corresponding to the first interface, to the first electronic device 10 via the first interface.

The second interface jack 2 is connected to the second interface of the second electronic device 20. The second interface jack 2 forwards the second interface signal output from the second electronic device 20 via the second interface, to the interface cable apparatus 40, and forwards the interface signal, which is output from the interface cable apparatus 40, corresponding to the second interface, to the second electronic device 20 via the second interface.

The cable 3 is an electrical connection line which electrically interconnects the first interface jack 1 and the second interface jack 2. The interface device 30, provided at the midway point in the cable 3, converts the first interface signal provided from the first electronic device 10 to the interface signal recognizable by the second electronic device 20 and outputs it to the second electronic device 20, and coverts the second interface signal provided from the second electronic device 20 to the interface signal recognizable by the first electronic device 10 and outputs it to the first electronic device 10.

The interface device 30 comprises a first interface unit 31 connected with the first interface jack 1 connected to the first electronic device 10, a second interface unit 32 connected with the second interface jack 2 connected to the second electronic device 20, and a signal converter 39. The signal converter 39 converts the first interface signal input through the first interface unit 31 to an interface signal communicable through the second interface and then outputs the converted interface signal to the second interface unit 32. Also, the signal converter 39 converts the second interface signal input through the second interface unit 32 to an interface signal capable of being communicated through the first interface and then outputs the converted interface signal to the first interface unit 31.

The first interface unit 31 receives the first interface signal via the first interface jack 1, provides the received first interface signal to a conversion circuit 33 of the signal converter 39, which will be described later, and outputs an interface signal produced in the conversion circuit 33 to the first interface jack 1.

The second interface unit 32 receives the second interface signal via the second interface jack 2, provides the received second interface signal to the conversion circuit 33 of the signal converter 39, and outputs an interface signal produced in the conversion circuit 33 to the second interface jack 2.

The signal converter 39 comprises the conversion circuit 33, conversion information unit 35, and a controller 37. The conversion circuit 33 changes the voltage level of the interface signal input from one of the first interface unit 31 and the second interface unit 32 and outputs the changed voltage level to the other interface unit 31 or 32. The conversion information unit 35 includes conversion information. The conversion information is used to convert the voltage level of the first interface signal to the voltage level corresponding to the second interface and convert the voltage level of the second interface signal to the voltage level corresponding to the first interface. The controller 37 serves to control the conversion circuit 33 based on the conversion information.

The conversion circuit 33, under the control of the controller 37, converts the voltage level of the first interface signal input through the first interface unit 31 to the voltage level corresponding to the second interface and then outputs the converted voltage level to the second interface unit 32. Also, the conversion circuit 33, under the control of the controller 37, converts the voltage level of the second interface signal input through the second interface unit 32 to the voltage level corresponding to the first interface and then outputs the converted voltage level to the first interface unit 31.

The conversion information 35 contains first level conversion information used to convert the voltage level of the first interface signal to the voltage level corresponding to the second interface, and second level conversion information used to convert the voltage level of the second interface signal to the voltage level corresponding to the first interface. Particularly, if the first interface signal conforms to the RS-232 communication interface, the first level conversion information is used to convert a voltage level of -8V ~ +8V of the first interface signal to a voltage level of +0 - +5V corresponding to the voltage level of the second interface signal which conforms to one of the TTL communication interface and the CMOS communication interface, which is the second interface of the second electronic device 20. If the second interface signal conforms to either the TTL communication interface or the CMOS communication interface, the second level conversion information is used to convert the voltage level of +0 ~ +5V of the second interface signal to the voltage level of -8V ~ +8V corresponding to the voltage level of the first interface signal which conforms to the RS-232 communication interface which is the first interface of the first electronic device 10.

Upon receiving the interface signal from either the first interface unit 31 or the second interface unit 32, the controller 37 controls the conversion circuit 33 to convert the voltage level of the input interface signal to the corresponding voltage level based on the conversion information. When the first interface signal is input through the first interface unit 31, the controller 37 controls the conversion circuit 33 to convert the voltage level of the first interface signal to the voltage level corresponding to the second interface and to output the converted voltage level to the second interface unit 32. When the second interface signal is input through the second interface unit 32, the controller 37 controls the conversion circuit 33 to convert the voltage level of the second interface signal to the voltage level corresponding to the first interface and to output the converted voltage level to the first interface unit 31. According to an exemplary implementation, the controller 37 may be a microcontroller capable of controlling the conversion circuit 33.

With the configuration as described above, the communication system can conduct proper communication between the electronic devices 10 and 20 that support different interfaces.

In this exemplary embodiment of the present invention, the first interface unit 31 and the second interface unit 32 perform universal asynchronous receiver/transmitter (UART) communication with the first electronic device 10 supporting the first interface and the second electronic device 20 supporting the second interface, respectively. More specifically, the interface device 30 receives the first interface signal and outputs the interface signal corresponding to the first interface signal to the first electronic device 10 through the UART communication with the first electronic device 10. Similarly, the interface device 30 receives the second interface signal and outputs the interface signal corresponding to the second interface signal to the second electronic device 20 through the UART communication with the second electronic device 20.

While the first interface signal and the second interface signal have different voltage levels, protocols to which the data design basically conforms are standardized to facilitate the two-way communications. Thus, the interface device 30 of the communication system can convert a voltage level of an interface signal output from one electronic device 10 or 20 supporting an interface such that a different electronic device 10 or 20 supporting a different interface can properly recognize the converted voltage level of the interface signal.

As described above, for the interface between the first electronic device 10 and the second electronic device 20 that supports the different interfaces for mutual communication, the communication system is provided with the interface cable apparatus 40 which converts the interface signal transferred from one electronic device 10 or 20 to the interface signal recognizable by the other electronic device 20 or 10 and then provides the converted interface signal to the other electronic device 20 or 10. The communication system may overcome the shortcomings of the conventional communication system which requires change to the communication interface of one electronic device 10 or 20 for proper data communication, and hence facilitates proper data communication between the electronic devices 10 and 20. This may be achieved by the above-described construction in which the first electronic device 10 and the second electronic device 20, which support the different communication interfaces, are interconnected using the interface cable apparatus 40.

Now, descriptions are made as to how to change the voltage level of the first and second interface signals for the communications between the first and second electronic devices 10 and 20 in the communication system according to the exemplary embodiment of the present invention.

Prior to the descriptions, it is assumed that the first electronic device 10 and the second electronic device 20 supporting different interfaces are interconnected by the interface cable apparatus 40, as shown in Figures 1 and 2.

First, the controller 37 determines whether the first interface signal is received through the first interface unit 31 at stepS10. Upon receiving the first interface signal, the controller 37 detects the voltage level of the first interface signal determined in the conversion circuit 33 at step S11. Next, at step S12, the controller 37 determines the voltage level corresponding to the second interface in correspondence to the detected voltage level of the first interface signal, based on the conversion information 35. The controller 37, in step S13, controls the conversion circuit 33 to convert the voltage level of the first interface signal to the voltage level determined at step S12. Consequently, the conversion circuit 33 converts the first interface signal input through the first interface unit 31 to the voltage level corresponding to the second interface and then outputs the converted voltage level to the second electronic device 20 at step S14.

By contrast, when it is determined at step S11 that the first interface signal is not received, the controller 37 determines whether the second interface signal is received through the second interface unit 32 at step S20. Upon receiving the second interface signal, the controller 37 detects the voltage level of the second interface signal determined in the conversion circuit 33 at step S21. Next, at step S22, the controller 37 determines the voltage level corresponding to the first interface in correspondence to the detected voltage level of the second interface signal, based on the conversion information 35. The controller 37 controls the conversion circuit 33 to convert the voltage level of the second interface signal to the voltage level determined at step S22. Consequently, the conversion circuit 33 converts the second interface signal input through the second interface unit 32 to the voltage level corresponding to the first interface and then outputs the converted voltage level to the first electronic device 10 step S24.

Thus, the first electronic device 10 can receive and properly recognize the second interface signal comprising the converted voltage level corresponding to the first interface by means of the interface cable apparatus 40 interconnecting the first electronic device 10 and the second electronic device 20. Also, the second electronic device 20 can receive and properly recognize the first interface signal comprising the converted voltage level corresponding to the second interface by means of the interface cable apparatus 40 interconnecting the second electronic device 20 and the first electronic device 10.

As described above, by the above-described simplified construction in which the first electronic device 10 and the second electronic device 20, which support the different communication interfaces, are interconnected using the interface cable apparatus 40, the communication system can overcome the shortcoming of the conventional communication system which requires to change the communication interface of one electronic device 10 or 20 for proper data communication, and hence enable proper data communication between the electronic devices 10 and 20.

As apparent from the above description, an exemplary embodiment of the present invention provides an interface device and an interface cable apparatus for facilitating proper communication between different electronic devices that support different communication interfaces without having to change specifications of the electronic devices, and a communication system comprising the interface device and the interface cable apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An interface device (30) comprising:
a first interface unit (31) for connecting to a first electronic device to transmit and receive a first interface signal;
a second interface unit (32) for connecting to a second electronic device to transmit and receive a second interface signal; and
a signal converter (39) for converting the first interface signal input through the first interface unit (31) into the second interface signal to be outputted to the second interface unit (32).

2. The interface device (30) according to claim 1, wherein the signal converter (39) converts a voltage level of the first interface signal input through the first interface unit (31) into a voltage level of the second interface signal to be outputted to the second interface unit (32).

3. The interface device (30) according to claim 2, wherein the signal converter (39) comprises a level conversion information unit (35) to convert the voltage level of the first interface signal into the voltage level of the second interface signal.

4. The interface device (30) according to claim 1, 2 or 3, wherein the signal converter (39) converts the second interface signal input through the second interface unit (32) into the first interface signal to be outputted to the first interface unit (31).

5. The interface device (30) according to claim 4, wherein the signal converter (39) converts a voltage level of the second interface signal input through the second interface unit (32) into a voltage level of the first interface signal to be outputted to the first interface unit (31).

6. The interface device (30) according to claim 5, wherein the signal converter (39) comprises a level conversion information unit (35) to convert the voltage level of the second interface signal into the voltage level of the first interface signal.

7. The interface device (30) according to claim 4, 5 or 6, wherein the first interface signal comprises an RS-232 interface signal, and the second interface signal comprises an interface signal different from the RS-232 interface signal.

8. The interface device (30) according to claim 7, wherein the second interface signal comprises one of a transistor-transistor logic (TTL) interface signal and a complementary metal oxide semiconductor (CMOS) interface signal.

9. The interface device (30) according to any preceding claim, wherein the first interface unit (31) and the second interface unit (32) perform universal asynchronous receiver and transmitter (UART) communication with the first electronic device and the second electronic device.

10. An interface cable apparatus (40) comprising:
a first interface jack (1) for connecting to a first electronic device to transmit and receive a first interface signal;
a second interface jack (2) for connecting to a second electronic device to transmit and receive a second interface signal;
an interface device (30) which converts a first interface signal input through the first interface jack (1) into a second interface signal to be outputted to the second interface jack (2), and converts the second interface signal input through the second interface jack (2) into the first interface signal to be outputted to the first interface jack (1).

11. The interface cable apparatus (40) according to claim 10, wherein the interface device (30) converts a voltage level of the first interface signal input through the first interface jack (1) into a voltage level of the second interface signal to be outputted to the second interface jack (2), and converts the voltage level of the second interface signal input through the second interface jack (2) into the level of the first interface signal to be outputted to the first interface jack (1).

12. The interface cable apparatus (40) according to claim 11, wherein the interface device (30) comprises a level conversion information unit (35) to convert the voltage level of the first interface signal into the voltage level of the second interface signal or convert the voltage level of the second interface signal into the voltage level of the first interface signal.

13. The interface cable apparatus (40) according to claim 12, wherein the first interface signal comprises an RS-232 interface signal, and the second interface signal comprises an interface signal different from the RS-232 interface signal.

14. The interface device (30) according to claim 13, wherein the second interface signal comprises one of a transistor-transistor logic (TTL) interface signal and a complementary metal oxide semiconductor (CMOS) interface signal.

15. A communication system for interfacing between electronic devices that support different interfaces, comprising:
a first electronic device (10) to transmit and receive a first interface signal;
a second electronic device (20) to transmit and receive a second interface signal;
an interface device (30) which comprises a first interface unit (31) for connecting to the first electronic device (10), a second interface unit (32) for connecting to the second electronic device (20), and a signal converter (39) for converting the first interface signal input through the first interface unit (31) into the second interface signal to be outputted to the second interface unit (32) and converting the second interface signal input through the second interface unit (32) into the first interface signal to be outputted to the first interface unit (31).

16. The communication system according to claim 15, wherein the signal converter (39) converts a voltage level of the first interface signal input through the first interface unit (31) into a voltage level of the second interface signal to be outputted to the second interface unit (32), and converts the voltage level of the second interface signal input through the second interface unit (32) into the level of the first interface signal to be outputted to the first interface unit (31).

17. The communication system according to claim 16, wherein the signal converter (39) comprises a level conversion information unit (35) to convert the voltage level of the first interface signal into the voltage level of the second interface signal or convert the voltage level of the second interface signal into the voltage level of the first interface signal.

18. The communication system according to claim 17, wherein the first interface signal comprises an RS-232 interface signal, and the second interface signal comprises an interface signal different from the RS-232 interface signal.

19. The communication system according to claim 18, wherein the second interface signal comprises one of a transistor-transistor logic (TTL) interface signal and a complementary metal oxide semiconductor (CMOS) interface signal.

20. The communication system according to claim 19, wherein the first interface unit (31) and the second interface unit (32) perform universal asynchronous receiver and transmitter (UART) communication with the first electronic device (10) and the second electronic device (20).

21. The communication system according to claim 20, further comprising:
interface jacks (1, 2) for connecting to the first electronic device (10) and the second electronic device (20), respectively; and
a cable (3) for connecting the interface jacks (1, 2) and the interface device (30).

22. A method for converting first and second interface signals for communication between first and second electronic devices (10, 20) in an interface device (30), the method comprising:
receiving the first interface signal from the first electronic device (10); and
converting the first interface signal into the second interface signal to be outputted to the second electronic device (20).

23. The method according to claim 22, further comprising:
receiving the second interface signal from the second electronic device (20); and
converting the second interface signal into the first interface signal to be outputted to the first electronic device (10).
